# EUROPÄISCHE PATENTSCHRIFT

(11) **EP 3 483 493 B1**
(45) Veröffentlichungstag und Bekanntmachung des Hinweises auf die Patenterteilung: **25.08.2021**
(21) Anmeldenummer: 18203791.1
(22) Anmeldetag: 31.10.2018
(51) Int. Cl.: F16N 7/38, F16N 29/02, F16N 29/04, F16N 25/00

(54) **SCHMIERANLAGE MIT EINEM KOMMUNIKATIONSNETZ ZWISCHEN EINEM HAUPTGERÄT UND MINDESTENS EINEM ANBAUGERÄT**
LUBRICATING INSTALLATION WITH A COMMUNICATION NETWORK BETWEEN MAIN UNIT AND AT LEAST ONE ATTACHMENT
SYSTÈME DE LUBRIFICATION DOTÉ D'UN RÉSEAU DE COMMUNICATION ENTRE UN APPAREIL PRINCIPAL ET AU MOINS UN APPAREIL RAPPORTÉ

(30) Priorität: 10.11.2017 DE 102017126385
(43) Veröffentlichungstag der Anmeldung: 15.05.2019
(73) Patentinhaber: Eugen Woerner GmbH & Co. KG, 97877 Wertheim (DE)
(72) Erfinder: Ballweg, Helmut, 97877 Wertheim (DE)
(74) Vertreter: DREISS Patentanwälte PartG mbB

(56) Entgegenhaltungen:
- EP-A1- 0 926 426
- EP-A1- 1 586 750
- EP-A1- 3 232 759
- EP-A1- 3 272 591
- US-A1- 2008 110 698
- US-A1- 2013 015 019

## Beschreibung

Die WO 2016/099257 A1 beschreibt ein hydraulisches Kupplungssystem. Mit Hilfe dieses Kupplungssystems kann beispielsweise ein Traktor mit einem Anhänger hydraulisch verbunden werden und das System verfügt über ein Erkennungsmittel, welche prüfen, ob eine und welche hydraulischen Leitungen mit Hydraulikfluid versorgt werden.

Aus der DE 41 23 226 A ist eine Schaltung zur Anordnung für die Steuerung der Schmierung von Anhängern von Nutzfahrzeugen bekannt, bei der die Zahl der Bremsvorgänge erfasst wird und abhängig von der Zahl der Bremsvorgänge ein Abschmieren der Bremsanlage des Fahrzeuganhängers ausgelöst wird.

Die DE 103 18 671 Albeschreibt eine Zentralschmieranlage, insbesondere für Maschinen, Fahrzeuge, Bau- oder Landmaschinen, die mindestens über einen Leitungsbruchwächter verfügt.

Die JP 2005090597 A beschreibt ein Zentralschmiersystem, umfassend eine hydraulisch steuerbare Schmierölversorgung sowie ein Verteilungsmittel, das ausgangsseitig mit einer Vielzahl zu schmierender Betriebskomponenten in Verbindung steht. Zur Durchführung eines Schmiervorgangs ist ein an einem Handhebel angeordneter Tastschalter zu betätigen. Ein ähnliches Zentralschmiersystem ist aus der DE 42 08 025 A1 bekannt.

Aus der nachveröffentlichten EP 3 272 591 ist eine Schmieranlage für ein System mit einem Hauptgerät und mindestens einem Anbaugerät bekannt.

Die Erfindung betrifft eine Schmieranlage für ein System mit einem Hauptgerät und mindestens einem Anbaugerät, umfassend mindestens folgende hauptgeräteseitigen Komponenten: eine Förderpumpe, mindestens eine Schmiermittelleitung, welche die Förderpumpe in Förderrichtung mit mindestens einem steuerbaren Verteiler zum Verteilen von Schmiermittel an Schmierstellen des Hauptgeräts verbindet, und eine zentrale Steuereinheit zum Steuern der Förderpumpe und des Verteilers. Anbaugeräteseitig umfasst das System mindestens einen weiteren steuerbaren Verteiler zum Verteilen von Schmiermittel an Schmierstellen des Anbaugeräts.

Die Erfindung betrifft weiterhin ein Verfahren zum Betreiben einer solchen Schmieranlage und ein Computerprogramm, sowie eine Steuereinheit und eine Dateneinheit zum Ausführen des Verfahrens.

Mit einer solchen Schmieranlage können Schmierstellen von Systemen mit wechselnden Haupt- und Anbaugeräten versorgt werden. Diese Situation tritt häufig bei Fahrzeugen mit wechselnden Anbaugeräten oder Anhängern auf. Zum Beispiel werden in der Landwirtschaft, Bauwirtschaft oder Forstwirtschaft Schlepper bzw. Fahrzeuge mit wechselnden Anbaugeräten und/oder Anbauteilen wie z.B. Frontlader, Ladewagen, Sämaschinen, Holzspalter usw. eingesetzt.
Auch der umgekehrte Fall tritt in der Praxis häufig auf; dies bedeutet, dass ein Anbaugerät an verschiedene Hauptgeräte, wie zum Beispiel verschiedene Schlepper, angeschlossen wird.

Viele dieser Anbaugeräte haben eine oder mehrere Schmierstellen, die regelmäßig abgeschmiert werden müssen. Es gibt aber auch stationäre Anlagen oder Maschinen, die mit verschiedenen Anbau-Werkzeugen oder -geräten betrieben werden; so dass auch hier die Zahl der Schmierstellen und - Intervalle wechselt.

Aus Gründen der sprachlichen Vereinfachung wird nachfolgend von einem "Hauptgerät" gesprochen; darunter werden alle mobilen Fahrzeuge, aber auch stationäre Geräte oder Maschinen verstanden, die nach Bedarf mit verschiedenen Anbaugeräten ausgerüstet werden können.

Unter dem Begriff "Schmierintervall" wird im Zusammenhang mit der Erfindung die Betriebsdauer von einem Abschmieren bis zum nächsten verstanden. Die Schmierintervalle werden in der Regel vom Hersteller für jedes Anbaugerät separat festgelegt.

Unter dem Begriff "Betriebsstunden" wird im Zusammenhang mit der Erfindung die Zeit verstanden, die ein Hauptgerät oder ein Anbaugerät so in Betrieb ist, dass die von den Schmierstellen versorgten Bauteile aktiv sind. Bei einem Ladewagen zum Beispiel, dessen Ladevorrichtung mit Schmierstellen versorgt werden, zählt nur die Zeit in der die Ladevorrichtung aktiv ist als Betriebsdauer; nicht jedoch die Fahrt auf das Feld mit deaktivierter Ladevorrichtung.

Zur Steigerung der Effizienz und Minimierung des benötigten Schmierstoffes, auch im Hinblick auf einen verbesserten Umweltschutz und zur Verringerung der Schmiermittelkosten, soll die Schmierung nur bei Bedarf erfolgen. Da heißt es soll ausreichend, nicht aber öfter als nötig geschmiert werden.

In der Landwirtschaft wird dies meist mit Schmierintervallen in Abhängigkeit von den Betriebsstunden realisiert. Die Schmierintervalle sowie die notwendige Schmiermenge sind je nach Anbaugerät verschieden. Dies führt in der Praxis häufig dazu, dass die Anbaugeräte nicht optimal geschmiert werden, was erhöhten Verschleiß und Reparaturen mit sich bringt.

Daher liegt der Erfindung die Aufgabe zugrunde, eine Schmieranlage bereitzustellen, bei der alle Schmierstellen wechselnder Haupt- und/oder Anbaugeräte zuverlässig und den im Betrieb auftretenden Belastungen entsprechend mit Schmiermittel versorgt werden. Dadurch sollen Lebensdauer und Zuverlässigkeit der Haupt- und/oder Anbaugeräte erhöht und gleichzeitig ein minimaler Schmiermittelverbrauch gewährleistet werden.

Diese Aufgabe wird erfindungsgemäß durch eine eingangs genannte Schmieranlage dadurch gelöst, dass anbaugeräteseitig eine Dateneinheit zum Erfassen und Speichern von Informationen im Zusammenhang mit dem Abschmieren der Schmierstellen des Anbaugeräts vorgesehen ist, und dass zwischen der zentralen Steuereinheit und der Dateneinheit eine Datenübertragungsverbindung zum Übertragen der in der Dateneinheit gespeicherten Informationen ausgebildet ist.

Um sicherzustellen, dass die an dem Anbaugerät vorhandenen Schmierstellen ausreichend, aber nicht unnötig oft mit Schmiermittel versorgt werden, ist jedem Schmierkreis auf dem Anbaugerät eine Dateneinheit zugeordnet. Bei diesen Dateneinheiten handelt es sich um Speichermedien, die optional aber nicht zwingend über einen Prozessor verfügen. Die Dateneinheiten enthalten beispielsweise eine Identifikation des Anbaugeräts und sind zum Abspeichern von Informationen im Zusammenhang mit dem Abschmieren der Schmierstellen des Anbaugeräts, wie zum Beispiel Informationen über die Schmierintervalle und/oder Betriebsdauern der Anbaugeräte und/oder manuelle Schmierungen und/oder Reinigungsvorgänge des Anbaugeräts, eingerichtet.

Diese Informationen werden über die zwischen der zentralen Steuereinheit und der Dateneinheit ausgebildete Datenübertragungsverbindung an die zentrale Steuereinheit übertragen. Beispielsweise kann die zentrale Steuereinheit zum Auslesen der in der Dateneinheit gespeicherten Informationen aus der Dateneinheit ausgebildet sein. Ebenso ist es auch denkbar, dass die Dateneinheit zum Versenden der Informationen und die zentrale Steuereinheit zum Empfangen der gesendeten Informationen ausgebildet sind. Zur Datenübertragung kann ein beliebiges geeignetes Übertragungsprotokoll verwendet werden.

Die zentrale Steuereinheit kann als eigenes Steuergerät ausgeführt oder in die Steuerung des Hauptgeräts, beispielsweise als Softwaremodul, integriert sein. Vorteilhafterweise umfasst die zentrale Steuereinheit eine Speichereinheit und/oder hat Zugriff auf eine Speichereinheit, in welcher die zur Schmierung der Schmierstellen des Hauptgeräts erforderlichen Informationen abgespeichert sind.

Die für ein jeweiliges Haupt- oder Anbaugerät relevanten Informationen im Zusammenhang mit der Schmierung, insbesondere über den Zeitpunkt des zuletzt erfolgten Abschmierens und/oder die Betriebsdauer seit dem letzten Abschmieren des jeweiligen Geräts sind also in einer Speichereinheit auf dem Haupt- oder Anbaugerät hinterlegt. Auf diese Weise ist ein Austauschen von Anbaugeräten und Hauptgeräten problemlos möglich, ohne dass relevante Informationen betreffend die Schmierung der Geräte verloren gehen, da diese in der Speichereinheit des jeweiligen Geräts selbst abgespeichert sind. Die relevanten Informationen sind dadurch gewissermaßen fest mit dem Gerät verbunden.

Weiterhin ist vorteilhafterweise vorgesehen, dass die zentrale Steuereinheit zum Verarbeiten der in der Dateneinheit gespeicherten Informationen und zum Aussenden von Ansteuerbefehlen in Abhängigkeit der in der Dateneinheit gespeicherten Informationen für den anbaugeräteseitigen Verteiler ausgebildet ist. Dadurch ist es möglich, in Abhängigkeit der in der Dateneinheit gespeicherten Informationen über die Schmierung des Anbaugeräts in der zentralen Steuereinheit zu berechnen, ob und ggf. wann ein erneutes Abschmieren des Anbaugeräts erforderlich ist. Die zentrale Steuereinheit kann beispielsweise die mit dem Anbaugerät seit dem letzten Abschmieren erfasste Betriebsdauer mit einem vom Hersteller vorgegebenen Schmierintervall vergleichen und daraus beispielsweise die Dauer bis zur nächsten notwendigen Schmierung feststellen.

Zum Schmieren einer anbaugeräteseitigen Schmierstelle sendet die zentrale Steuereinheit bedarfsgerecht Ansteuerbefehle für den anbaugeräteseitigen Verteiler aus. Es ist denkbar, dass die zentrale Steuereinheit eine direkte Kommunikationsverbindung zu dem steuerbaren anbaugeräteseitigen Verteiler aufbauen kann. Gleichzeitig wird der Datensatz auf der Dateneinheit des Anbaugeräts aktualisiert. Dies kann entweder über die zentrale Steuereinheit erfolgen oder die Dateneinheit erkennt selbsttätig, dass eine Schmierung erfolgt ist und ändert den Datensatz entsprechend.

Vorteilhafterweise überträgt die zentrale Steuereinheit die Ansteuerbefehle über die Datenübertragungsverbindung an die Dateneinheit und die Dateneinheit steuert daraufhin den anbaugeräteseitigen Verteiler an. Ein Ansteuern des Verteilers bewirkt ein bedarfsgerechtes Abschmieren der Schmierstellen. Das bedarfsgerechte Abschmieren umfasst das Abschmieren zu einem gewünschten Zeitpunkt und/oder mit einer gewünschten Schmiermittelmenge.

Um die hauptgeräteseitigen Schmierstellen bedarfsgerecht zu Schmieren, ist es vorteilhaft, wenn die zentrale Steuereinheit zum Aussenden von Ansteuerbefehlen für den hauptgeräteseitigen Verteiler ausgebildet ist.

Ferner erweist es sich als vorteilhaft, dass die zentrale Steuereinheit zum Erfassen von Informationen im Zusammenhang mit der Überwachung der hauptgeräteseitigen Verteiler und/oder die Dateneinheit zum Erfassen von Informationen im Zusammenhang mit der Überwachung der anbaugeräteseitigen Verteiler ausgebildet ist. Beispielsweise umfassen die Verteiler jeweils eine Überwachungseinrichtung, welche überwacht ob und/oder wann eine Schmierung an dem jeweiligen Verteiler erfolgt. Die Überwachungseinrichtung gibt diese Information an die Dateneinheit und/oder die zentrale Steuereinheit weiter, so dass diese Informationen über den Zeitpunkt des erfolgten Abschmierens und/oder Informationen über die Betriebsdauer seit dem letzten Abschmieren erfassen und speichern können.

In der Dateneinheit des Anbaugeräts sind also Informationen über den Zeitpunkt des erfolgten Abschmierens der anbaugeräteseitigen Schmierstellen und/oder Informationen über die Betriebsdauer seit dem letzten Abschmieren gespeichert, und in der zentralen Steuereinheit sind Informationen über den Zeitpunkt des erfolgten Abschmierens der hauptgeräteseitigen Schmierstellen und/oder Informationen über die Betriebsdauer seit dem letzten Abschmieren gespeichert. Dadurch ist ein Austauschen von Anbaugeräten und Hauptgeräten problemlos möglich. Die für ein jeweiliges Haupt- oder Anbaugerät relevanten Informationen über das Abschmieren sind in der jeweiligen Speichereinheit auf dem Gerät hinterlegt und somit auf jedem Gerät verfügbar.

Wird beispielsweise während eines Schmierintervalls ein Anbaugerät und/oder ein Hauptgerät ausgetauscht, sind diese Informationen bei der nächsten Verwendung des jeweiligen Geräts verfügbar.

Um die in der Dateneinheit gespeicherten Informationen übertragen zu können, ist es vorteilhaft, wenn die Datenübertragungsverbindung zwischen der zentralen Steuereinheit und der Dateneinheit durch eine Signalleitung gebildet wird.

Alternativ dazu ist es natürlich auch möglich, dass die Datenübertragungsverbindung zwischen der zentralen Steuereinheit und der Dateneinheit über eine drahtlose Kommunikationsverbindung realisiert ist. Dabei können die Datenübertragungsverbindungen zwischen der zentralen Steuereinheit und der Dateneinheit z.B. über WLAN, WiFi, NFC oder Bluetooth realisiert sein.

Eine drahtlose Verbindung ist insbesondere dann vorteilhaft, wenn die Dateneinheit als RFID-Chip ausgebildet ist. Dann nämlich kann das Auslesen von Informationen (Schmierintervalle; benötigte Schmiermittelmenge; Betriebsdauer) aus der Dateneinheit ohne zusätzliche Stromversorgung erfolgen.

Es ist ferner auch denkbar, dass die Dateneinheit eines Anbaugerätes ausgebildet ist, nach dem Anschluss der Dateneinheit an eine Stromversorgung automatisch eine Datenübertragungsverbindung zu der zentralen Steuereinheit des Anbaugerätes herzustellen, sodass die Dateneinheit und die zentrale Steuereinheit ein Ad-hoc-Netzwerk bilden. Zur Datenübertragung kann ein beliebiges geeignetes Übertragungsprotokoll verwendet werden.

In weiterer vorteilhafter Ausgestaltung der Erfindung ist es vorteilhaft, wenn die Dateneinheit des Anbaugeräts eine Speichereinrichtung und/oder eine Steuereinrichtung umfasst.

Die Speichereinrichtung kann beispielsweise als RFID-Chip, als USB-Speichergerät oder als Speicherkarte ausgebildet sein. Die Datenübertragung zwischen der Dateneinheit und der zentralen Steuereinheit erfolgt über eine entsprechende Schnittstelle.

Ferner kann die Dateneinheit in einer bevorzugten Ausführungsform als Steuergerät, insbesondere als ein Mikrocontroller umfassend einen Prozessor, eine oder mehrere Speichereinrichtungen und optional weitere Peripheriefunktionen, ausgebildet sein. Dies erweist sich insbesondere dann als vorteilhaft, wenn die Dateneinheit zum Ansteuern und/oder Überwachen der anbaugeräteseitigen Verteiler ausgebildet ist.

In Weiterbildung der Erfindung erweist es sich als vorteilhaft, dass eine Verbindungsleitung und/oder eine Kopplungseinrichtung den mindestens einen anbaugeräteseitigen Verteiler mit der hauptgeräteseitigen Förderpumpe verbindet. Die Versorgung der gesamten Schmieranlage erfolgt also zentral über die hauptgeräteseitige Förderpumpe und die zentrale Steuereinheit.

Alternativ dazu kann es auch vorgesehen sein, dass anbaugeräteseitig eine Förderpumpe und eine Schmiermittelleitung vorgesehen sind, welche die Förderpumpe in Förderrichtung mit dem mindestens einen anbaugeräteseitigen Verteiler verbindet. Die Versorgung der anbaugeräteseitigen Schmierstellen erfolgt dann über einen eigenen anbaugeräteseitigen Schmierkreis über die anbaugeräteseitige Förderpumpe und unabhängig von der Versorgung der hauptgeräteseitigen Schmierstelle über die hauptgeräteseitige Förderpumpe. In diesem Fall ist neben der Datenübertragungsverbindung zwischen der zentralen Steuereinheit und der Dateneinheit keine weitere Verbindung zwischen den Schmiersystemen des Hauptgeräts und des Anbaugeräts notwendig. Die Ansteuerung der anbaugeräteseitigen Förderpumpe erfolgt dann vorteilhafterweise durch die Dateneinheit des Anbaugeräts.

Vorteilhafterweise ist eine elektrische Versorgungsleitung zur Stromversorgung von elektrischen anbaugeräteseitigen Komponenten vorgesehen. Bei Bedarf kann beispielsweise eine Stromversorgung zwischen Anbaugerät und Hauptgerät hergestellt werden. Alternativ kann die Stromversorgung der anbaugeräteseitigen Komponenten auch über Batterien oder Akkumulatoren erfolgen.

Vorteilhafterweise ist zwischen der Schmiermittelleitung bzw. der Verbindungsleitung und den Verteilern jeweils ein insbesondere schaltbares Wegeventil angeordnet. Das schaltbare Wegeventil hat die Aufgabe, die Schmiermittelleitung bzw. die Verbindungsleitung zu verschließen, so dass kein Schmiermittel ungewollt die in Förderrichtung hinter dem Wegeventil angeordnete Schmierstelle erreicht; selbst wenn die Förderpumpe eingeschaltet ist. Wenn die hinter dem schaltbaren Wegeventil angeordnete Schmierstelle mit Schmierstoff versorgt werden soll, wird das Wegeventil geöffnet und die Förderpumpe aktiviert, so dass die gewünschte Menge an die hinter dem geöffneten Wegeventil angeordneten Schmierstellen gelangen kann.

Vorteilhafterweise sind die Wegeventile durch die zentrale Steuereinheit und/oder die Dateneinheit ansteuerbar.

Die eingangs genannte Aufgabe wird ebenfalls gelöst durch ein Verfahren zum Betreiben einer Schmieranlage nach einem, der Ansprüche 1 bis 12, wobei das Verfahren folgende Verfahrensschritte aufweist:
- Erfassen und Speichern von Informationen im Zusammenhang mit dem Abschmieren der Schmierstellen des Anbaugeräts mit der anbaugeräteseitigen Dateneinheit;
- Übertragen der in der Dateneinheit gespeicherten Informationen an die zentrale Steuereinheit über eine Datenübertragungsverbindung;
- Verarbeiten der in der Dateneinheit gespeicherten Informationen durch die zentrale Steuereinheit, und
- Aussenden von Ansteuerbefehlen in Abhängigkeit der in der Dateneinheit gespeicherten Informationen für den anbaugeräteseitigen Verteiler durch die zentrale Steuereinheit.

Durch dieses Verfahren ist es möglich, bei verschiedensten Anbaugeräten zu gewährleisten, dass jedes dieser Anbaugeräte regelmäßig und ausreichend oft abgeschmiert wird. Dadurch erhöht sich die Lebensdauer der Anbaugeräte und die ungeplanten Ausfälle der Anbaugeräte werden vermindert und in Summe die Produktivität erhöht. Gleichzeitig ist gewährleistet, dass nicht unnötig viel Schmiermittel eingesetzt wird und somit die Umwelt entlastet wird.

Um eine optimale Versorgung mit Schmiermittel zu gewährleisten, erweist es sich als vorteilhaft, dass die Dateneinheit Informationen über die Betriebsdauer eines Anbaugeräts und über ein erfolgtes Abschmieren erfasst.

Wird ein Anbaugerät mit einem Hauptgerät verbunden, überträgt das Anbaugerät vorteilhafterweise Informationen zur Identifikation des Anbaugeräts (Typenbezeichnung, Kennung etc.) und Informationen im Zusammenhang mit dem Abschmieren der Schmierstellen des, z.B. die Schmierintervalle, Schmiermittelmenge, Zeitpunkt des letzten Abschmierens der Schmierstellen des Anbaugeräts und/oder die seit dem letzten Abschmieren des Anbaugeräts abgelaufene Betriebsdauer. Die Betriebsdauer wird fortlaufend aktualisiert. Diese Informationen werden an die zentrale Steuereinheit übertragen. Die zentrale Steuereinheit verarbeitet diese Informationen und berechnet beispielsweise aus einem Vergleich mit einem für das jeweilige Anbaugerät bestimmte Schmiermittelintervall einen Zeitpunkt oder eine Dauer bis zum nächsten notwendigen Abschmieren. Sobald ein Abschmieren notwendig ist, wird ein entsprechender Ansteuerbefehl für den anbaugeräteseitigen Verteiler und/oder die Förderpumpe ausgesendet.

So kann beispielsweise, wenn das Anbaugerät ein Anhänger ist, dessen Schmierstellen die Achslager mit Schmiermittel versorgen, die Betriebsdauer in Abhängigkeit von der Zeit ermittelt werden, die das Anbaugerät (hier der Anhänger) an einem Fahrzeug angehängt ist und das Fahrzeug sich in Betrieb befindet.

Wenn das Anbaugerät beispielsweise ein Ladewagen ist und die Schmierstellen einen Lademechanismus versorgen, der über eine Zapfwelle angetrieben wird, dann ist der entscheidende Parameter für die Bestimmung der Betriebsdauer die Betriebsdauer der Zapfwelle, das heißt, die Zeit, in der der Lademechanismus angetrieben wird.

Bei anderen Anbaugeräten, wie zum Beispiel einem Pflug, kann die betriebsrelevante Betriebsdauer auf einfache Weise festgestellt werden, indem abgefragt wird, wie lange sich das Anbaugerät in seiner Arbeitsposition befindet, weil in der Arbeitsposition die Arbeitshydraulik des Schleppers abgesenkt ist.

Selbstverständlich ist diese Aufzählung nur beispielhaft und nicht abschließend, sondern es können noch weitere gerätespezifische Kriterien für die Erfassung der Betriebsdauer seit dem letzten Abschmieren hinterlegt werden.

Um eine hauptgeräteseitige Versorgung mit Schmiermittel zu gewährleisten, ist in erfindungsgemäßer Ausgestaltung vorgesehen, dass die zentrale Steuereinheit Ansteuerbefehle für den hauptgeräteseitigen Verteiler aussendet.

Vorteilhafterweise steuert die zentrale Steuereinheit und/oder die Dateneinheit Wegeventile, welche zwischen der Schmiermittelleitung bzw. der Verbindungsleitung und den Verteilern angeordnet sind, an.

Ferner wird die eingangs genannte Aufgabe ebenfalls gelöst durch ein Computerprogramm, ein Steuergerät und eine Dateneinheit, welche jeweils zum Ausführen des Verfahrens nach einem der Ansprüche 13 bis 15 ausgebildet ist.

Weitere Vorteile in vorteilhafter Ausgestaltung der Erfindung sind der nachfolgenden Zeichnung, deren Beschreibung und den Patentansprüchen beschrieben.

In der Zeichnung zeigen:
Figur 1 eine schematische Darstellung einer erfindungsgemäßen Schmieranlage gemäß einer ersten bevorzugten Ausführungsform;
Figur 2 eine schematische Darstellung einer erfindungsgemäßen Schmieranlage gemäß einer zweiten bevorzugten Ausführungsform, und
Figur 3 eine schematische Darstellung einer erfindungsgemäßen Schmieranlage gemäß einer dritten bevorzugten Ausführungsform.

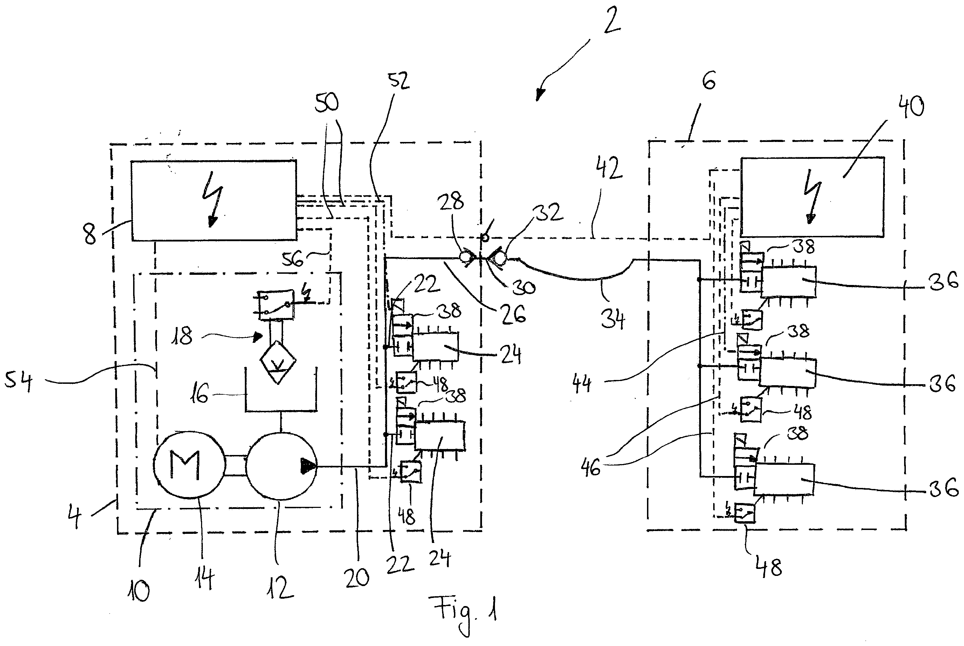

In der Figur 1 ist eine in ihrer Gesamtheit mit dem Bezugszeichen 2 versehene erfindungsgemäße Schmieranlage für ein System mit einem Hauptgerät und einem Anbaugerät schematisch dargestellt. Das Hauptgerät und das Anbaugerät sind in den Zeichnungen durch die Blöcke 4 und 6 schematisch angedeutet.

Die Schmieranlage 2 umfasst folgende hauptgeräteseitigen Komponenten: eine zentrale Steuereinheit 8, ein Pumpenaggregat 10 mit einer Förderpumpe 12, einem Motor 14 und einem Behälter 16 für das Schmiermittel. Als Förderpumpe 12 ist prinzipiell jede aus dem Stand der Technik bekannte Schmiermittelpumpe geeignet. Allerdings ist es oft vorteilhaft, wenn die Förderpumpe einen kompakten Aufbau hat; so dass bevorzugt eine elektrisch angetriebene Kolbenpumpe eingesetzt wird. Der Behälter 16 für das Schmiermittel kann ebenfalls in allen aus dem Stand der Technik bekannten Bauarten ausgeführt sein. Ferner umfasst der Behälter 16 eine optionale Füllstandmesseinrichtung 18.

Die Förderpumpe 12 fördert das Schmiermittel vom Behälter 16 in eine als Ringleitung oder als Stichleitung ausgebildete Schmiermittelleitung 20. Zur Versorgung der an dem Hauptgerät 4 vorhandenen Schmierstellen sind an der Schmiermittelleitung 20 zwei Abzweige 22 vorhanden, die jeweils einen (Progressiv-) Verteiler 24 mit Schmiermittel versorgen. Über diesen Verteiler 24 werden die Schmierstellen (nicht dargestellt) bedarfsgerecht mit Schmierstoff versorgt.

An der Schmiermittelleitung 20 ist ein weiterer Abzweig 26 vorhanden. Über diese Abzweig 26 kann das Anbaugerät 6 bedarfsgerecht mit Schmiermittel versorgt werden. An einem Ende des Abzweigs 26 ist ein Kupplungsstück 28 einer Kupplungseinrichtung 30 vorgesehen. Ein an dem Anbaugerät 6 vorgesehenes Gegenstück 32 bildet zusammen mit dem Kupplungsstück 28 die Kupplungseinrichtung 30.

Wenn nun ein Anbaugerät an der Maschine angebaut wird, werden zeitgleich mithilfe der Kupplungseinrichtung 30 die Schmierstelle(n) des Anbaugeräts mit der Schmiermittelleitung 20 verbunden.

In Förderrichtung hinter dem Gegenstück 32 wird der Abzweig 26 fortgesetzt. Dieses Leitungsstück hinter dem Gegenstück 32 hat das Bezugszeichen 34. Das Leitungsstück 34 verbindet das Gegenstück 32 über anbaugeräteseitige Verteiler 36 mit den Schmierstellen des Anbaugeräts. Bei einfachen Anbaugeräten ist lediglich eine Schmierstelle vorhanden, während bei komplexen Anbaugeräten eine Vielzahl von Schmierstellen vorhanden ist.

Gemäß der dargestellten Ausführungsform sind zwischen der Schmiermittelleitung 20 und den Verteilern 24 sowie der Leitung 34 und den Verteilern 36 manuell oder elektrisch schaltbare Wegeventile 38 angeordnet, die in der Regel stromlos geschlossen sind. Die Wegeventile 38 können beispielsweise als 2/2- oder 3/2- Wegeventil ausgeführt sein. Es gelangt also nur Schmiermittel an die Schmierstellen ST, wenn die schaltbaren Wegeventile 38 geöffnet sind.

Ferner verfügt die Schmieranlage über eine anbaugeräteseitige Dateneinheit 40. Diese Dateneinheit 40 kann als RFID-Chip, als USB-Speichergerät oder als Speicherkarte, aber auch als Steuergerät mit Speicher und Prozessor, ausgebildet sein.

In jedem Fall können zwischen der Dateneinheit 40 und der zentralen Steuereinheit 8 Daten übertragen werden. In der Figur 1 ist diese Datenübertragungsverbindung durch eine gestrichelte Linie 42, die eine Signalleitung darstellen soll, angedeutet. Über diese Signalleitung 42 können Informationen zwischen der zentralen Steuereinheit 8 und der Dateneinheit 40 vorteilhafterweise in beiden Richtungen ausgetauscht werden. Bei diesen Informationen handelt es sich beispielsweise um Informationen zur Identifikation des Anbaugeräts (Typenbezeichnung etc.) und Informationen im Zusammenhang mit dem Abschmieren der Schmierstellen des Anbaugeräts, z.B. die Schmierintervalle, Schmiermittelmenge, Zeitpunkt des letzten Abschmierens und/oder die seit dem letzten Abschmieren des Anbaugeräts aufgelaufene Betriebsdauer.

Des Weiteren kann die Dateneinheit 40 Informationen über den Betrieb des Anbaugeräts, bzw. dessen Betriebsdauer an die Steuereinheit 8 übermitteln. Die Betriebsdauer wird vorteilhafterweise laufend aktualisiert.

Die zentrale Steuereinheit 8 verarbeitet die von der Dateneinheit 40 gespeicherten und an die Steuereinheit 8 übertragenen Informationen und bestimmt in Abhängigkeit davon Ansteuerbefehle für die anbaugeräteseitigen Verteiler 36 und/oder für die Wegeventile 38. Diese Ansteuerbefehle werden über die Datenübertragungsverbindung an die Dateneinheit 40 übertragen. Die Dateneinheit 40 steuert in Abhängigkeit der empfangenen Ansteuerbefehle die Verteiler und/oder die Wegeventile 38 an, so dass die anbaugeräteseitigen Schmierstellen bedarfsgerecht versorgt werden. Dies ist schematisch und bespielhaft für ein Ventil 38 über die strich-punktierte Linie 44 dargestellt. Alternativ ist es auch möglich, dass die Verteiler und/oder die Wegeventile 38 direkt von der zentralen Steuereinheit 8 angesteuert werden.

Ferner ist die Dateneinheit 40 zum Erfassen von Informationen im Zusammenhang mit der Überwachung der anbaugeräteseitigen Verteiler 36 über eine Datenübertragungsverbindung 46 mit Überwachungseinrichtungen 48 der Verteiler 36 verbunden. Die Überwachungseinrichtungen 48 überwachen ob und/oder wann eine Schmierung an dem jeweiligen Verteiler 36 erfolgt und geben diese Informationen über die Datenübertragungsverbindung 46 an die Dateneinheit 40 weiter. Die Dateneinheit 40 speichert diese Informationen und gibt diese über die Datenübertragungsverbindung 42 an die zentrale Steuereinheit 8 weiter, wobei die zentrale Steuereinheit 8 wie schon beschrieben diese Informationen verarbeitet und Ansteuerbefehle aussendet.

Die zentrale Steuereinheit 8 selbst ist zum Erfassen von Informationen im Zusammenhang mit der Überwachung der hauptgeräteseitigen Verteiler 24 über eine schematisch und beispielhaft dargestellte Datenübertragungsverbindung 50 mit Überwachungseinrichtungen 48 der hauptgeräteseitigen Verteiler 24 verbunden. Die Überwachungseinrichtungen 48 überwachen ob und/oder wann eine Schmierung an dem jeweiligen hauptgeräteseitigen Verteiler 24 erfolgt und geben diese Informationen über die Datenübertragungsverbindung 50 an die zentrale Steuereinheit 8 weiter. Die zentrale Steuereinheit 8 verarbeitet diese Informationen und bestimmt in Abhängigkeit davon Ansteuerbefehle für die hauptgeräteseitigen Verteiler 24 und/oder für die Wegeventile 38. Diese Ansteuerbefehle werden über eine schematisch und beispielhaft dargestellte Datenübertragungsverbindung 52 an die hauptgeräteseitigen Verteiler 24 und/oder die Wegeventile 38 übertragen, so dass die hauptgeräteseitigen Schmierstellen bedarfsgerecht versorgt werden.

Die zentrale Steuereinheit ist ferner zum Ansteuern der Förderpumpe 12, bzw. des Pumpenmotors 14 ausgebildet. Dies ist schematisch durch die gestrichelte Linie 54 dargestellt.

Ferner ist die zentrale Steuereinheit 8 über eine Datenübertragungsverbindung 56 mit der Füllstandmesseinrichtung 18 des Behälters 16 verbunden. Bei den genannten Datenübertragungsverbindungen handelt es sich beispielsweise um Signalleitungen, mittels derer die genannten Daten und/oder Informationen und/oder Befehle leitungsgebunden zwischen den genannten Einrichtungen übertragen werden. Insbesondere ist es denkbar, dass die zwischen der zentralen Steuereinheit 8 und der Dateneinheit 40 sowie den übrigen genannten Einrichtungen elektrische Stromversorgungsleitungen vorgesehen sind. Diese sind in den Figuren nicht weiter dargestellt. Alternativ kann die Stromversorgung der anbaugeräteseitigen Komponenten auch über Batterien oder Akkumulatoren erfolgen.

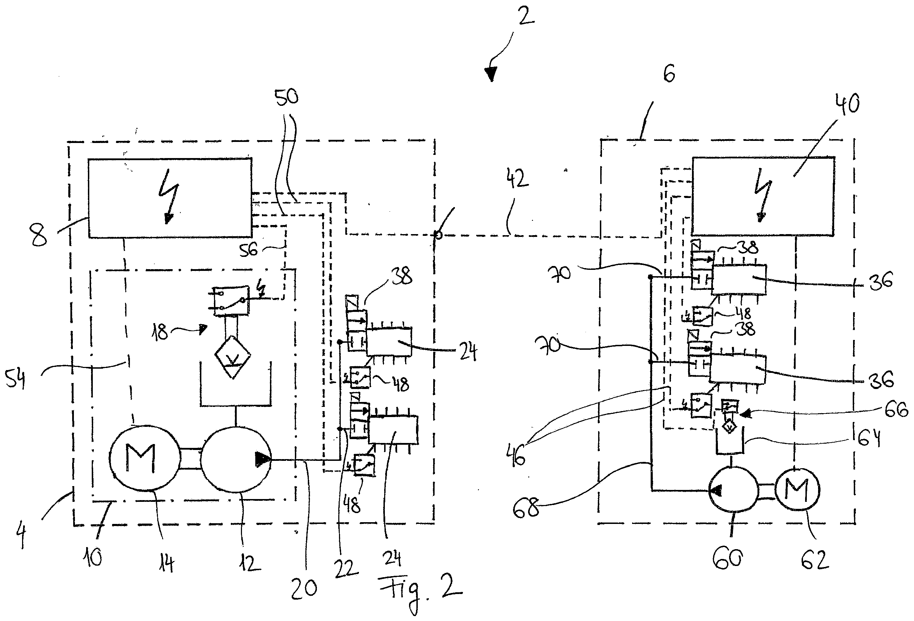

Figur 2 zeigt eine weitere bevorzugte Ausführungsform der erfindungsgemäßen Schmieranlage 2. Gemäß dieser Ausführungsform ist ein separater anbaugeräteseitiger Schmierkreis mit einer anbaugeräteseitigen Förderpumpe 60, einem Motor 62 und einem Behälter 64 für das Schmiermittel vorgesehen. Als Förderpumpe 60 ist prinzipiell jede aus dem Stand der Technik bekannte Schmiermittelpumpe geeignet.

Allerdings ist es oft vorteilhaft, wenn die Förderpumpe 60 einen kompakten Aufbau hat; so dass bevorzugt eine elektrisch angetriebene Axialkolbenpumpe eingesetzt wird. Der Behälter 64 für das Schmiermittel kann ebenfalls in allen aus dem Stand der Technik bekannten Bauarten ausgeführt sein. Ferner umfasst der Behälter 64 eine Füllstandmesseinrichtung 66.

Die anbaugeräteseitigen Schmierstellen werden aus dem anbaugeräteseitigen Schmierkreis versorgt. Dazu fördert die Förderpumpe 60 das Schmiermittel vom Behälter 64 in eine als Ringleitung oder als Stichleitung ausgebildete anbaugeräteseitige Schmiermittelleitung 68. Zur Versorgung der an dem Anbaugerät 6 vorhandenen Schmierstellen sind an der Schmiermittelleitung Abzweige 70 vorhanden, die jeweils einen Verteiler 36 mit Schmiermittel versorgen. Über diesen Verteiler 36 werden die Schmierstellen bedarfsgerecht mit Schmierstoff versorgt.

Die Dateneinheit 40 ist vorteilhafterweise ein Steuergerät, insbesondere ein Mikrocontroller, und ist vorteilhafterweise zur Steuerung und Überwachung des gesamten anbaugeräteseitigen Schmierkreises ausgebildet. Der Informationsaustausch zwischen der zentralen Steuereinheit 8 und der Dateneinheit 40 und die Berechnung der Ansteuerbefehle mittels der zentralen Steuereinheit 8 erfolgt wie bereits in Verbindung mit Figur 1 beschrieben. D.h. die Berechnung der Ansteuerbefehle erfolgt vorzugsweise zentral in der Steuereinheit 8.

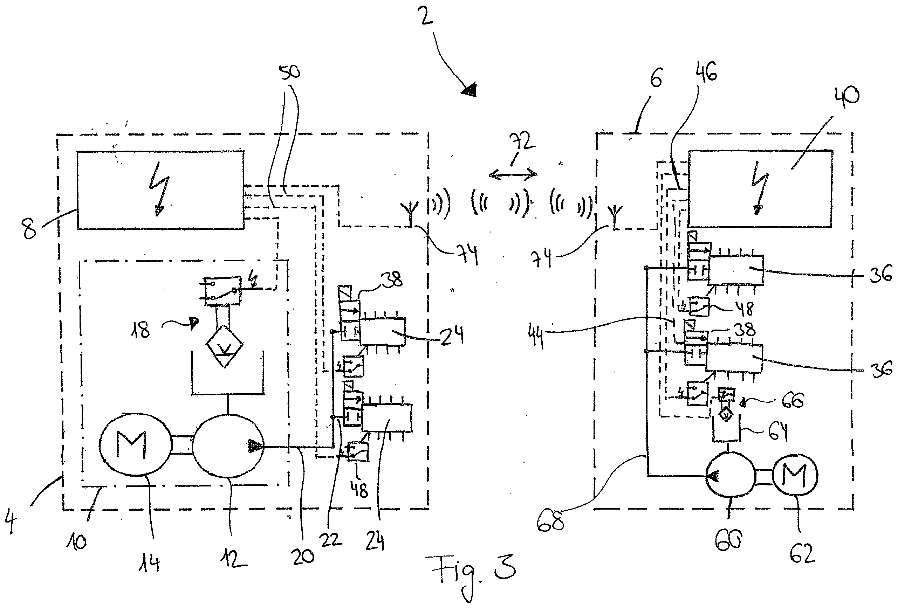

Figur 3 zeigt eine weitere bevorzugte Ausführungsform der Schmieranlage 2. Gemäß dieser Ausführungsform handelt es sich bei der Datenübertragungsverbindung um eine drahtlose Kommunikationsverbindung 72. Die Schmieranlage 2 verfügt jeweils über ein hauptgeräteseitiges und ein anbaugeräteseitiges Sende- und Empfangsmodul 74. Die Datenübertragungsverbindung zwischen der zentralen Steuereinheit 8 und der Dateneinheit 40 kann z.B. über WLAN, WiFi, NFC oder Bluetooth realisiert sein.

## Patentansprüche

1. Schmieranlage (2) für ein System mit einem Hauptgerät (4) und mindestens einem Anbaugerät (6), umfassend mindestens folgende hauptgeräteseitigen Komponenten:
eine Förderpumpe (12), mindestens eine Schmiermittelleitung (20), welche die Förderpumpe (12) in Förderrichtung mit mindestens einem steuerbaren Verteiler (24) zum Verteilen von Schmiermittel an Schmierstellen (ST) des Hauptgeräts (4) verbindet, und
eine zentrale Steuereinheit (8) zum Steuern der Förderpumpe (12) und des Verteilers (24), sowie mindestens einen weiteren anbaugeräteseitigen steuerbaren Verteiler (36) zum Verteilen von Schmiermittel an Schmierstellen (ST) des Anbaugeräts (6), **dadurch gekennzeichnet, dass** anbaugeräteseitig eine Dateneinheit (40) zum Erfassen und Speichern von Informationen im Zusammenhang mit dem Abschmieren der Schmierstellen des Anbaugeräts (6) vorgesehen ist, und
dass zwischen der zentralen Steuereinheit (8) und der Dateneinheit (40) eine Datenübertragungsverbindung zum Übertragen der in der Dateneinheit (40) gespeicherten Informationen ausgebildet ist.

2. Schmieranlage (2) nach Anspruch 1, **dadurch gekennzeichnet, dass** die zentrale Steuereinheit (8) zum Verarbeiten der in der Dateneinheit (40) gespeicherten Informationen und zum Aussenden von Ansteuerbefehlen in Abhängigkeit der in der Dateneinheit (40) gespeicherten Informationen für den anbaugeräteseitigen Verteiler (36) ausgebildet ist.

3. Schmieranlage (2) nach Anspruch 1 oder 2, **dadurch gekennzeichnet, dass** die zentrale Steuereinheit (8) zum Aussenden von Ansteuerbefehlen für den hauptgeräteseitigen Verteiler (24) ausgebildet ist.

4. Schmieranlage (2) nach einem der vorhergehenden Ansprüche, **dadurch gekennzeichnet, dass** die zentrale Steuereinheit (8) zum Erfassen von Informationen im Zusammenhang mit der Überwachung der hauptgeräteseitigen Verteiler und/oder die Dateneinheit (40) zum Erfassen von Informationen im Zusammenhang mit der Überwachung der anbaugeräteseitigen Verteiler ausgebildet ist.

5. Schmieranlage (2) nach einem der vorhergehenden Ansprüche, **dadurch gekennzeichnet, dass** die Datenübertragungsverbindung zwischen der zentralen Steuereinheit (8) und der Dateneinheit (40) durch eine Signalleitung (32) gebildet wird.

6. Schmieranlage (2) nach einem der Ansprüche 1 bis 4, **dadurch gekennzeichnet, dass** die Datenübertragungsverbindung zwischen der zentralen Steuereinheit (8) und der Dateneinheit (40) über eine drahtloses Kommunikationsverbindung realisiert ist.

7. Schmieranlage (2) nach einem der vorhergehenden Ansprüche, **dadurch gekennzeichnet, dass** die Dateneinheit (40) des Anbaugeräts (6) eine Speichereinrichtung und/oder eine Steuereinrichtung umfasst.

8. Schmieranlage (2) nach einem der vorhergehenden Ansprüche, **dadurch gekennzeichnet, dass** eine Verbindungsleitung (26, 34) und/oder eine Kopplungseinrichtung (30) den mindestens einen anbaugeräteseitigen Verteiler (36) mit der hauptgeräteseitigen Förderpumpe (12) verbindet.

9. Schmieranlage (2) nach einem der vorhergehenden Ansprüche, **dadurch gekennzeichnet, dass** anbaugeräteseitig eine Förderpumpe (60) und eine Schmiermittelleitung (68) vorgesehen ist, welche die Förderpumpe (60) in Förderrichtung mit dem mindestens einen anbaugeräteseitigen Verteiler (36) verbindet.

10. Schmieranlage (2) nach einem der vorhergehenden Ansprüche, **dadurch gekennzeichnet, dass** eine elektrische Versorgungsleitung zur Stromversorgung von elektrischen anbaugeräteseitigen Komponenten (40, 38, 48, 62) vorgesehen ist.

11. Schmieranlage (2) nach einem der vorhergehenden Ansprüche, **dadurch gekennzeichnet, dass** zwischen der Schmiermittelleitung (20) bzw. der Verbindungsleitung (34) und den Verteilern (24; 36) jeweils ein insbesondere schaltbares Wegeventil (38) angeordnet ist.

12. Schmieranlage (2) nach Anspruche 11, **dadurch gekennzeichnet, dass** die Wegeventile (38) durch die zentrale Steuereinheit (8) und/oder die Dateneinheit (40) ansteuerbar sind.

13. Verfahren zum Betreiben einer Schmieranlage (2) nach einem, der Ansprüche 1 bis 12, **gekennzeichnet durch** folgende Verfahrensschritte:
- Erfassen und Speichern von Informationen im Zusammenhang mit dem Abschmieren der Schmierstellen des Anbaugeräts (6) mit der anbaugeräteseitigen Dateneinheit (40);
- Übertragen der in der Dateneinheit (40) gespeicherten Informationen an die zentrale Steuereinheit (8) über eine Datenübertragungsverbindung;
- Verarbeiten der in der Dateneinheit (40) gespeicherten Informationen durch die zentrale Steuereinheit (8), und
- Aussenden von Ansteuerbefehlen in Abhängigkeit der in der Dateneinheit (40) gespeicherten Informationen für den anbaugeräteseitigen Verteiler (36) durch die zentrale Steuereinheit (8).

14. Verfahren nach Anspruch 13, **dadurch gekennzeichnet, dass** die zentrale Steuereinheit (8) Ansteuerbefehle für den hauptgeräteseitigen Verteiler (24) aussendet.

15. Verfahren nach Anspruch 13 oder 14, **dadurch gekennzeichnet, dass** die zentrale Steuereinheit (8) und/oder die Dateneinheit (40) Wegeventile (38), welche zwischen der Schmiermittelleitung (20) bzw. der Verbindungsleitung (34) und den Verteilern (24, 36) angeordnet sind, ansteuern.

16. Zentrale Steuereinheit (8) und Dateneinheit (40), welche zum Ausführen eines Verfahrens nach einem der Ansprüche 13 bis 15 ausgebildet sind.

17. Computerprogramm, umfassend Befehle, die bewirken, , dass die Vorrichtung nach Anspruch 16 die Verfahrensschritte nach einem der Ansprüche 13 bis 15 ausführt .

## Claims

1. Lubricating installation (2) for a system with a main unit (4) and at least one attachment (6), comprising at least the following components in the main unit:
a conveying pump (12), at least one lubricant line (20) that connects the conveying pump (12) in the conveying direction to at least one controllable distributor (24) for distributing lubricant at lubrication points (ST) of the main unit (4), a central control unit (8) for controlling the conveying pump (12) and the distributor (24), and at least one other controllable distributor (36) in the attachment for distributing lubricant at lubrication points (ST) of the attachment (6), **characterised in that** a data unit (40) is provided in the attachment for recording and storing information relating to the lubrication of the lubrication points of the attachment (6), and **in that** a data transmission link for transmitting the information stored in the data unit (40) is formed between the central control unit (8) and the data unit (40).

2. Lubricating installation (2) according to claim 1, **characterised in that** the central control unit (8) is designed to process the information stored in the data unit (40) and to issue control commands to the distributer (36) in the attachment depending on the information stored in the data unit (40).

3. Lubricating installation (2) according to claim 1 or 2, **characterised in that** the central control unit (8) is designed to issue control commands to the distributor (24) in the main unit.

4. Lubricating installation (2) according to any of the preceding claims, **characterised in that** the central control unit (8) is designed to record information relating to the monitoring of the distributors in the main unit and/or the data unit (40) is designed to record information relating to the monitoring of the distributors in the attachment.

5. Lubricating installation (2) according to any of the preceding claims, **characterised in that** the data transmission link between the central control unit (8) and the data unit (40) is formed by means of a signal line (32).

6. Lubricating installation (2) according to any of claims 1 to 4, **characterised in that** the data transmission link between the central control unit (8) and the data unit (40) is achieved by means of a wireless communication link.

7. Lubricating installation (2) according to any of the preceding claims, **characterised in that** the data unit (40) of the attachment (6) comprises a memory apparatus and/or a control apparatus.

8. Lubricating installation (2) according to any of the preceding claims, **characterised in that** a connection line (26, 34) and/or a coupling apparatus (30) connects the at least one distributor (36) in the attachment to the conveying pump (12) in the main unit.

9. Lubricating installation (2) according to any of the preceding claims, **characterised in that** a conveying pump (60) and a lubricant line (68) that connects the conveying pump (60) in the conveying direction to the at least one distributor (36) in the attachment are provided in the attachment.

10. Lubricating installation (2) according to any of the preceding claims, **characterised in that** an electrical supply line is provided for supplying power to electric components (40, 38, 48, 62) in the attachment.

11. Lubricating installation (2) according to any of the preceding claims, **characterised in that** an in particular switchable directional valve (38) is arranged between the lubricant line (20) and each of the distributors (24) and between the connection line (34) and each of the distributors (36) .

12. Lubricating installation (2) according to claim 11, **characterised in that** the directional valves (38) can be controlled by means of the central control unit (8) and/or the data unit (40).

13. Method for operating a lubricating installation (2) according to any of claims 1 to 12, **characterised by** the following method steps:
- recording and storing information relating to the lubrication of the lubrication points of the attachment (6) by means of the data unit (40) in the attachment;
- transmitting the information stored in the data unit (40) to the central control unit (8) via a data transmission link;
- processing the information stored in the data unit (40) by means of the central control unit (8), and
- issuing control commands to the distributor (36) in the attachment by means of the central control unit (8) depending on the information stored in the data unit (40).

14. Method according to claim 13, **characterised in that** the central control unit (8) issues control commands to the distributor (24) in the main unit.

15. Method according to claim 13 or 14, **characterised in that** the central control unit (8) and/or the data unit (40) control directional valves (38) that are arranged between the lubricant line (20) and the distributors (24) and between the connection line (34) and the distributors (36).

16. Central control unit (8) and data unit (40) that are designed to carry out a method according to any of claims 13 to 15.

17. Computer program comprising commands that cause the device according to claim 16 to carry out the method steps according to any of claims 13 to 15.

## Revendications

1. Système de lubrification (2) pour un système comprenant un appareil principal (4) et au moins un appareil accessoire (6), comprenant au moins les composants suivants du côté de l'appareil principal : une pompe d'alimentation (12), au moins une conduite de lubrifiant (20) qui relie la pompe d'alimentation (12) dans la direction d'alimentation à au moins un distributeur commandable (24) pour distribuer le lubrifiant en des points de lubrification (ST) de l'appareil principal (4), et une unité de commande centrale (8) pour commander la pompe d'alimentation (12) et le distributeur (24), et au moins un autre distributeur commandable (36) du côté de l'appareil accessoire pour distribuer le lubrifiant en des points de lubrification (ST) de l'appareil accessoire (6), **caractérisé en ce qu'**une unité de données (40) est prévue du côté de l'appareil accessoire pour acquérir et stocker des informations en relation avec la lubrification des points de lubrification de appareil accessoire (6), et **en ce qu'**une liaison de transmission de données pour transmettre les informations stockées dans l'unité de données (40) est formée entre l'unité de commande centrale (8) et l'unité de données (40).

2. Système de lubrification (2) selon la revendication 1, **caractérisé en ce que** l'unité de commande centrale (8) est conçue pour traiter les informations mémorisées dans l'unité de données (40) et pour émettre des instructions de commande en fonction des informations mémorisées dans l'unité de données (40) pour le distributeur (36) du côté de l'appareil accessoire.

3. Système de lubrification (2) selon la revendication 1 ou 2, **caractérisé en ce que** l'unité de commande centrale (8) est conçue pour émettre des instructions de commande pour le répartiteur (24) du côté de l'appareil principal.

4. Système de lubrification (2) selon l'une quelconque des revendications précédentes, **caractérisé en ce que** l'unité de commande centrale (8) est conçue pour recevoir des informations en rapport avec la surveillance des distributeurs du côté de l'appareil principal et/ou l'unité de données (40) est conçue pour recevoir des informations en rapport avec la surveillance des distributeurs du côté de l'appareil accessoire.

5. Système de lubrification (2) selon l'une quelconque des revendications précédentes, **caractérisé en ce que** la liaison de transmission de données entre l'unité de commande centrale (8) et l'unité de données (40) est formée par une ligne de signaux (32).

6. Système de lubrification (2) selon l'une quelconque des revendications 1 à 4, **caractérisé en ce que** la liaison de transmission de données entre l'unité de commande centrale (8) et l'unité de transmission de données (40) est réalisée par l'intermédiaire d'une liaison de communication sans fil.

7. Système de lubrification (2) selon l'une quelconque des revendications précédentes, **caractérisé en ce que** l'unité de données (40) de l'appareil accessoire (6) comprend un dispositif de stockage et/ou un dispositif de commande.

8. Système de lubrification (2) selon l'une quelconque des revendications précédentes, **caractérisé en ce qu'**une conduite de liaison (26, 34) et/ou un dispositif de couplage (30) relie ledit au moins un distributeur (36) du côté de l'appareil accessoire à la pompe d'alimentation (12) du côté de l'appareil principal.

9. Système de lubrification (2) selon l'une quelconque des revendications précédentes, **caractérisé en ce que**, du côté de l'appareil accessoire, une pompe d'alimentation (60) et une conduite de lubrifiant (68) qui relie la pompe d'alimentation (60) dans la direction d'alimentation audit au moins un distributeur (36) du côté de l'appareil accessoire, sont prévues.

10. Système de lubrification (2) selon l'une quelconque des revendications précédentes, **caractérisé en ce qu'**une ligne d'alimentation électrique est prévue pour l'alimentation électrique de composants électriques (40, 38, 48, 62) du côté de l'appareil accessoire.

11. Système de lubrification (2) selon l'une quelconque des revendications précédentes, **caractérisé en ce qu'**une soupape de distribution (38) respective, en particulier commutable, est disposée entre la conduite de lubrification (20) ou respectivement la conduite de raccordement (34), et les distributeurs (24 ; 36).

12. Système de lubrification (2) selon la revendication 11, **caractérisé en ce que** les soupapes de distribution (38) peuvent être actionnés par l'unité de commande centrale (8) et/ou l'unité de données (40).

13. Procédé pour faire fonctionner un système de lubrification (2) selon l'une quelconque des revendications 1 à 12, **caractérisé par** les étapes de procédé suivantes :
- l'acquisition et le stockage d'informations en relation avec la lubrification des points de lubrification de l'appareil accessoire (6), à l'aide de l'unité de données (40) du côté de l'appareil accessoire ;
- la transmission des informations stockées dans l'unité de données (40) à l'unité de commande centrale (8) par l'intermédiaire d'une liaison de transmission de données ;
- le traitement des informations stockées dans l'unité de données (40) par l'unité de commande centrale (8), et
- l'émission de commandes d'actionnement par l'unité centrale de commande (8) en fonction des informations stockées dans l'unité de données (40) pour le distributeur (36) du côté de l'appareil accessoire.

14. Procédé selon la revendication 13, **caractérisé en ce que** l'unité de commande centrale (8) émet des commandes d'actionnement pour le distributeur (24) du côté de l'appareil principal.

15. Procédé selon la revendication 13 ou 14, **caractérisé en ce que** l'unité de commande centrale (8) et/ou l'unité de données (40) commandent des soupapes de distribution (38) qui sont disposés entre la conduite de lubrifiant (20) ou respectivement la conduite de raccordement (34), et les distributeurs (24, 36).

16. Unité centrale de commande (8) et unité de données (40) qui sont conçues pour la mise en œuvre d'un procédé selon l'une des revendications 13 à 15.

17. Programme informatique comprenant des instructions pour amener le dispositif selon la revendication 16 à mettre en œuvre les étapes de procédé selon l'une quelconque des revendications 13 à 15.
